# EUROPÄISCHE PATENTANMELDUNG

(11) **EP 3 739 240 A1**
(43) Veröffentlichungstag der Anmeldung: **18.11.2020**
(21) Anmeldenummer: 20170315.4
(22) Anmeldetag: 20.04.2020
(51) Int. Cl.: F16H 63/34

(54) **PARKSPERRENSYSTEM**

(30) Priorität: 15.05.2019 DE 102019207075
(71) Anmelder: Magna PT B.V. & Co. KG, 74199 Untergruppenbach (DE)
(72) Erfinder: KRISTOFCSAK, Andras, 51375 Leverkusen (DE)
(74) Vertreter: Zangger, Bernd

(57) **Zusammenfassung**

Parksperrensystem (1) mit einer Schaltwalze (3) mindestens einer daran angebundenen Schaltgabelanordnung (4) mit Schaltgabel (5) sowie einer Parksperrenanordnung (10), die ein Parksperrenrad (13) und eine Parksperrenklinke (11) aufweist, wobei die Parksperrenklinke (11) drehbar an einer Klinkenachse (12) gelagert ist, wobei das Einrücken der Parksperrenklinke (11) in einer Lücke des Parksperrenrad (13) über eine von einem Aktuator über eine Aktuatorstange (22) betätigbaren Sperrkeil (18) erfolgt, wobei der Sperrkeil (18) in ein Widerlager (15) eingreift, wobei das Widerlager (15) drehbar an einem Gehäuse (27) gelagert ist.

## Beschreibung

Die vorliegende Erfindung betrifft ein Parksperrensystem für ein Kraftfahrzeuggetriebe mit einem Gehäuse, mit einem Sperrmechanismus, der dazu ausgebildet ist, in einer Sperrposition eine Welle in Bezug auf das Gehäuse festzulegen und in einer Freigabeposition die Welle freizugeben, mit einem Betätigungsmechanismus zum Betätigen des Sperrmechanismus.

### Stand der Technik

Parksperrensysteme der oben genannten Art sind allgemein bekannt. Diese dienen dazu, in einem Kraftfahrzeuggetriebe, insbesondere in einem automatisierten Kraftfahrzeuggetriebe, das Fahrzeug zu immobilisieren. Die Welle ist dabei eine Ausgangswelle des Getriebes, die in unmittelbarer Wirkverbindung mit angetriebenen Rädern des Kraftfahrzeuges steht. In der Sperrposition wird ein Verdrehen der Welle verhindert und folglich ein Wegrollen des Fahrzeugs ausgeschlossen.

Aus der EP 2 927 540 B1 ist eine Ausführungsform bekannt, in der an dem Gehäuse ein Ziehkeil axial verschieblich gelagert, der eine Parksperrenklinke in einer Freigabeposition freigibt und zum Einrichten der Sperrposition zwischen einen Gehäuseabschnitt und einen Betätigungsabschnitt der Parksperrenklinke gezogen wird, um auf diese Weise eine in Bezug auf das Gehäuse formschlüssige Sperrposition für die Parksperrenklinke zu realisieren, wobei ein Klinkenzahn der Parksperrenklinke in eine Parksperrenverzahnung eines Parksperrenrades eingreift, das mit der Welle drehfest verbunden ist.

Für Situationen, bei denen während dieses Betätigungsvorganges der Klinkenzahn auf einem Zahn der Parksperrenverzahnung aufliegt, kann der Sperrmechanismus mit einer sogenannten Einrückfeder ausgestattet sein, die für diesen Fall gespannt wird, so dass das Sperrglied , der Ziehkeil aufgrund der in der Einrückfeder gespeicherten Energie die Parksperrenklinke in die Sperrposition versetzt, sobald das Parksperrenrad sich verdreht beispielsweise aufgrund eines Rollens des Fahrzeugs.

Weitere bekannte Sperrmechanismen sind in Form von Nockenelementen ausgebildet, die an einer parallel zur Klinkenachse angeordneten Welle festgelegt sind.

Der Betätigungsmechanismus kann eine Schnittstelle zu einem manuellen Ganghebel im Innenraum des Kraftfahrzeuggetriebes aufweisen, so dass bei dessen Versetzen in eine Position "P" das Parksperrenanordnungbetätigt wird. Andererseits ist es auch bekannt, den Betätigungsmechanismus mit einem Aktuator auszustatten oder diesen von einem Aktuator antreiben zu lassen, um ein sogenanntes "park-by-wire"-Parksperrenanordnungzu realisieren. Die Aktuatoren können hydraulische Aktuatoren sein, können jedoch auch elektromechanische Aktuatoren wie Schaltwalzen beinhalten.

Parksperrenanordnungen unterliegen in der Regel engen Vorgaben hinsichtlich des Bauraumes. In der EP 2 927 540 B1 ist der Betätigungsmechanismus versetzt zur Welle angeordnet und die Parksperrenklinke wird über ein Koppelglied, das senkrecht zur Drehachse angeordnet ist aktiviert. Der Koppelaktuator sitzt dabei an der Schaltwalze und beansprucht Bauraum im Getriebe. Es gibt eine in Schaltrichtung genutzte Schaltgabel, die man in der anderen Schaltrichtung für die Parksperrenaktuierung mit verwenden kann. Zum Problem wird eine solche Parksperre, wenn die Sperrkräfte an einem Sperrkonus zu hoch sind durch z.B. ungünstige Achsübersetzung, kleines Parkrad und/oder sehr schweres Fahrzeug. Da der Sperrkonus zur Klinke und zur Widerlager theoretisch jeweils Punktkontakt darstellt, kann die Flächenpressung zu hoch werden und zum extremen Verschleiß führen.

Vor dem obigen Hintergrund ist es eine Aufgabe der Erfindung, eine verbesserte Parksperrenanordnung anzugeben, mit denen wenigstens einer der oben genannten Nachteile vermieden wird oder gelindert werden kann.

Die obige Aufgabe wird gelöst mit einem Parksperrensystem mit einer Schaltwalze mindestens einer daran angebundenen Schaltgabel sowie einer Parksperrenanordnung, die ein Parksperrenrad und eine Parksperrenklinke aufweist, wobei die Parksperrenklinke drehbar an einer Klinkenachse gelagert ist, wobei das Einrücken der Parksperrenklinke in das Parksperrenrad über eine von einem Aktuator über eine Aktuatorstange betätigbaren Sperrkeil erfolgt, wobei der Sperrkeil in ein Widerlager eingreift, wobei das Widerlager drehbar an einem Gehäuse gelagert ist.

Die Kombination eines Sperrkeil mit einem drehbar gelagerten Widerlager ermöglicht ein Selbstzentrieren des Systems, das eine hohe Toleranz für die Einführung des Sperrkeils aufweist. Die Erfindung reduziert die Flächenpressung die zwischen Sperrkörper, Widerlager und Klinke unter allen Betriebsbedingungen - Verschiebung/Schiefstellung durch Bauteiltoleranzen, elastische Verformung der Klinke unter statischen und dynamischen Lasten auftritt.

Vorteilhafterweise umfasst das Widerlager Führungsplatten, die den Sperrkeil auf zwei Seiten führen. Mit den Führungsplatten ist auch eine seitliche Führung des Sperrkeils hergestellt, was die Selbstzentrierung sicherstellt.

Es ist dabei von Vorteil, dass der Sperrkeil in einen Raum eingeführt wird, der durch das Widerlager, die Parksperrenklinke und die Führungsplatten gebildet ist.

Dadurch erhält man einen sehr einfachen Aufbau.

In einer vorteilhaften Ausgestaltung weist der Sperrkeil einen Endbereich mit einer ersten Dicke sowie einem Befestigungsbereich mit einer zweiten Dicke auf, wobei die Bereiche über Flanken ineinander übergehen.

Besonders vorteilhaft wird der Aufbau der Parksperrenanordnung, wenn die Aktuatorstange an einer von der Schaltwalze geführten Schaltgabelanordnung angebunden ist.

Damit wird der Aktuator mit seiner Aktuatorstange baulich nahe an das Parksperrenrad sowie an die Schaltgabel platziert, wodurch zusätzliche Hebel zwischen einem Aktuator an der Schaltwalze und dem Parksperrenrad und der Parksperrenklinke vermieden werden.

Es ist von Vorteil, dass das Widerlager, die Führungsplatten und die Parksperrenklinke den Raum begrenzen, in dem der Sperrkeil in allen Raumrichtungen geführt ist.

Optimal ist dabei, wenn die Aktuatorstange an einer von der Schaltwalze geführten Schaltgabelordnung angebunden ist.

Alternativ kann die Anbindung der Aktuatorstange direkt erfolgen oder eine Halterung aufweisen, die die Aktuatorstange trägt.

In einer Weiterführung der Erfindung sind an der Schaltgabelanordnung oder an der Halterung Vorrichtungen vorgesehen sind, die die Parksperrenanordnung im deaktivierten Zustand sichern. Damit wird vermieden, dass bei Erschütterungen die Parksperre versehentlich ausgelöst wird, die Parksperrenklinke wird vom Parksperrenrad ferngehalten.

Dazu kann die Halterung eine Lasche aufweisen, die Parksperrenklinke arrtiert.

### Beispiel der Erfindung

Ausführungsbeispiele der Erfindung sind in der Zeichnung dargestellt und werden in der nachfolgenden Beschreibung näher erläutert. Es zeigen:
Fig1: eine perspektivische Ansicht einer Ausführungsform eines erfindungsgemäßen Parksperrensystems,
Fig. 2 und Fig. 3: eine perspektivische Ansicht einer Parksperrenanordnung,
Fig. 4 und 5 zeigen Schnitte der Parksperrenanordnung im deaktivierten Zustand,
Fig. 6 und 7 zeigen Schnitte im aktivierten Zustand.

Ein beliebiges Getriebe weist ein Parksperrensystem 1 auf. Das Parksperrensystem 1 beinhaltet eine Parksperrenanordnung 10, die ein Parksperrenrad 13 beinhaltet, das an einer Ausgangswelle 21 drehfest festgelegt ist. Ferner weist die Parksperrenanordnung 10 eine Parksperrenklinke 11 auf, die um eine gehäusefeste Klinkenachse 12 verschwenkbar ist, und zwar zwischen einer Freigabeposition, in der die Parksperrenklinke 11 das Parksperrenrad 13 freigibt, und einer Sperrposition, in der ein Zahn der Parksperrenklinke 11 in eine Zahnlücke des Parksperrenrades 13 greift, um die damit verbundene Welle gegenüber dem Gehäuse festzulegen und folglich das Kraftfahrzeug zu immobilisieren.

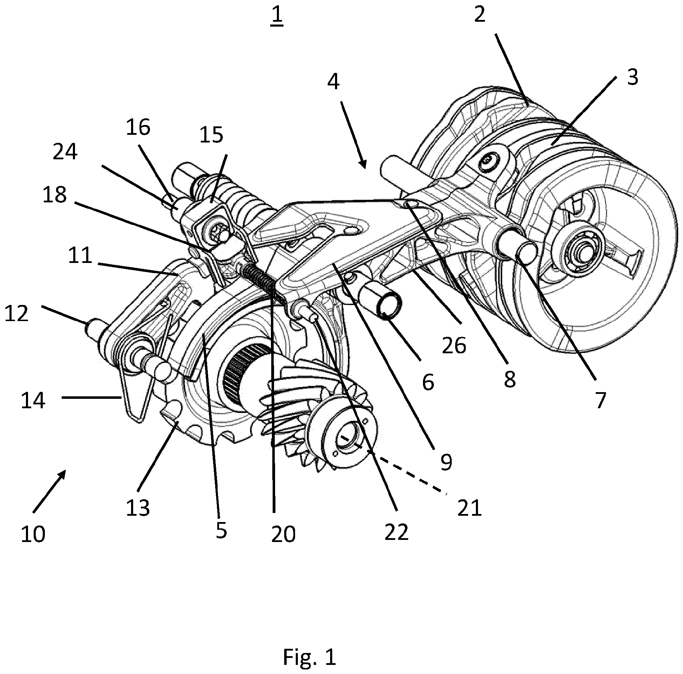

In Figur 1 ist das Parksperrensystem 1 dargestellt, das einen Ausschnitt aus einer größeren Getriebeanordnung darstellt. Das Parksperrensystem umfasst eine Schaltwalze 2, auf deren Oberfläche Schaltkonturen 3 aufgebracht sind. In einer der gezeigten Schaltkonturen 3 bewegt sich ein Führungsnocken einer Schaltgabelanordnung 4 mit einer Schaltgabel 5. Die Schaltgabelanordnung 4 ist dabei an Schaltgabelwellen 6 und 7 verschiebbar gelagert.

Zwischen den beiden Schaltgabelwellen 6 und 7 erstreckt sich ein Arm 26, auf den eine Halterung 9 mithilfe von Nietverbindungen 8 aufgebracht ist. Die Halterung 9 ist in diesem Ausführungsbeispiel eine Platte mit einem v-förmigen Einschnitt, so dass zwei Arme, der erste Arm 9a und der zweite Arm 9b vorhanden sind. Die Halterung 9 ist des Weiteren mit einer Aktuatorstange 22 verbunden, an der ein Aktuator angeschlossen wird. Der Aktuator ist in der Figur 1 nicht dargestellt. Die Aktuatorstange 22 ist von einer Einrückfeder 20 umhüllt und endet an dem vom Aktuator abgewandten Ende in einem Sperrkeil 18.

Der Sperrkeil 18 greift in ein Widerlager 15 ein, dass wiederum über eine Schraube 16 an einem Gehäuse 27 des Getriebes angebunden ist. Die Anbindung des Widerlagers erfolgt über eine Flanschbuchse 24, der eine Drehbewegung des Widerlagers 15 um die Achse der Schraube 16 mit Hilfe eines Gleitlagers 25 erlaubt. Die beiden Achsen, die Aktuatorachse und die Achse der Schraube liegen dabei - in der Sperrposition - parallel.

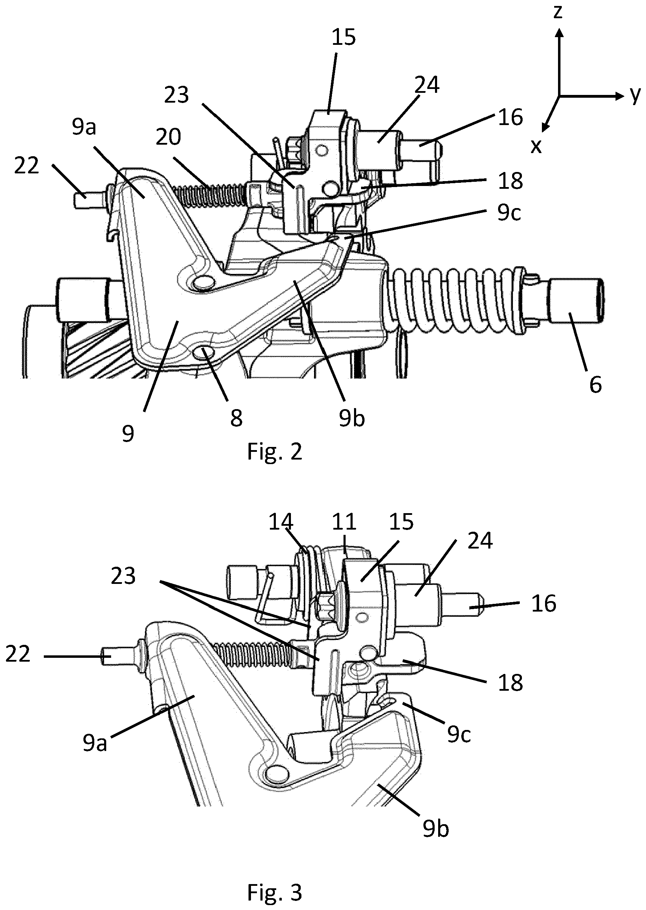

Figur 2 und 3 zeigen eine vergrößerte Darstellung der Parksperrenanordnung 10 mit dem Sperrkeil 18. Der Sperrkeil 18 weist einen Endbereich 18a auf, in dem sich der Sperrkeil 18 auf eine Dicke D1 verjüngt. Im Ausführungsbeispiel ist dabei eine konstante Dicke D1 gewählt worden, die Dicke ist dabei in z-Richtung gemessen.

In einem Befestigungsbereich 18c umfasst der Sperrkeil 18 die Aktuatorstange 22 und ist fest mit ihr verbunden. Ausgehend von einer Dicke D2 in z-Richtung im Befestigungsbereich 18c des Sperrkeils 18, reduziert sich die Dicke entlang von Flanken 18b in y-Richtung auf den Endbereich 18a hin. Die Dicke D2 kann dabei konstant über den Befestigungsbereich 18c sein, oder sich in y-Richtung vom Wiederlager 15 weg vergrößern, um so eine Keilform auszubilden.

Das Widerlager 15 umgibt den Sperrkeil 18 und ist selbst über die Flanschbuchse 24 und die Schraube 16 drehbar gelagert. Ein Gleitlager 25 ist in das Widerlager 15 eingepresst und auf die Flanschbuchse 24 montiert.

Das Widerlager 15 weist jeweils eine Führungsplatte 23, die sich in der y-z-Ebenen erstreckt, auf, die beide Seiten des Sperrkeils 18 begrenzen und zwischen denen der Sperrkeil 18 bei seiner Bewegung in y-Richtung geführt wird.

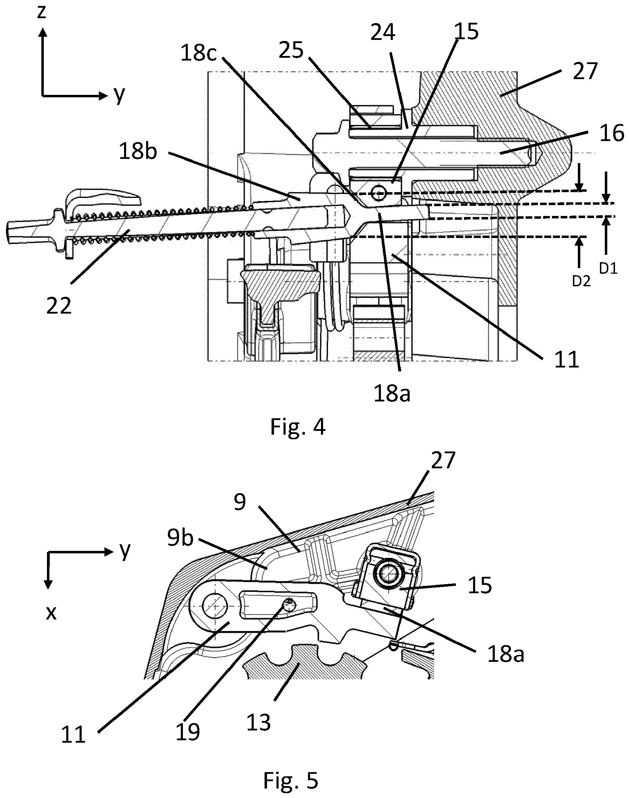

In Figur 4 und 5 ist jeweils im Schnittbild eine Parksperrenanordnung 10 zu erkennen, wenn die Parksperrenklinke 11 nicht eingerückt ist.

Zu erkennen ist im Schnittbild in Figur auf 4 die Form des Sperrkeils 18 mit seinem zungenförmigen Endbereich 18a und dem Befestigungsbereich 18b der die Aktuatorstange 22 umfasst. Der Sperrkeil 18 liegt mit seinen Flanken 18c am Widerlager 15 sowie an der Parksperrenklinke 11 an. In Figur 5 erkennt man, dass der Sperrkeil 18 mit seinem Endbereich 18a auf der Parksperrenklinke 11 aufliegt.

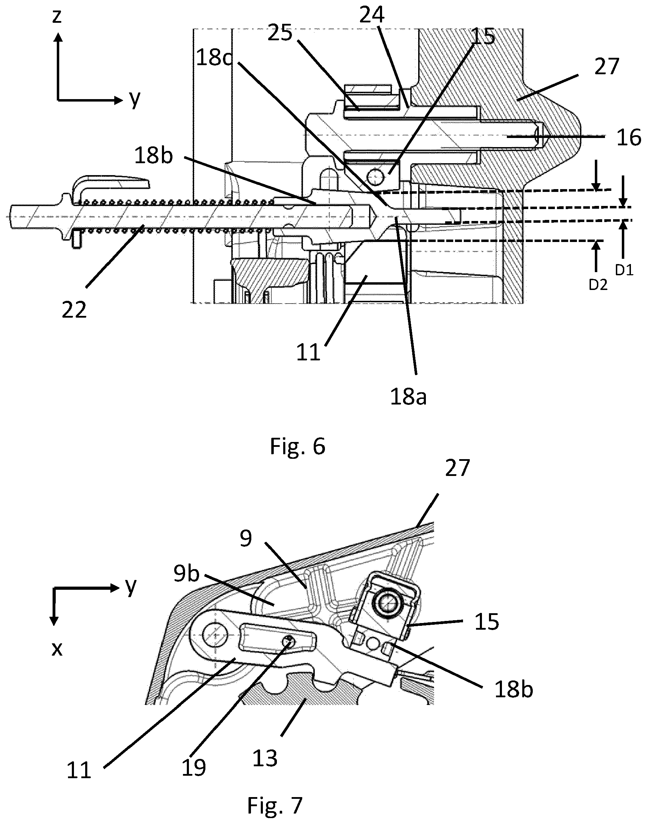

In Figur 6 und 7 ist die Situation dargestellt, wenn die Parksperrenklinke 11 in das Parksperrenrad 13 eingreift und somit die Parksperrenanordnung 10 aktiviert ist. Zur Sicherung der Parksperrposition wird der Sperrkeil 18 in y-Richtung in den von Widerlager 15 und Parksperrenklinke 11 gebildeten Raum 30 geschoben. Dabei wird die Parksperrenklinke 11 nach unten gedrückt, sobald die größerer Dicke D2 des Sperrkeils 18 über den Flankenbereich 18b den Befestigungsbereich 18c erreicht.

Die Parksperrenanordnung ermöglicht bei einer Bewegung des Sperrkeils senkrecht zur Bewegungsebene der Parksperrenklinke 11 und des Parksperrenrades 13 Linienkontakt gleichzeitig zwischen dem Sperrkeil 18 und der Parksperrenklinke 11 sowie dem Sperrkeil 18 und dem Widerlager 15.

Die Parksperrenanordnung 10 verwendet ein bereits vorhandenes Schaltsystem und eine bereits vorhandene Schaltwalze 2 eines Getriebes. Die Anbindung erfolgt dabei auf einfache Weise, indem die Aktuatorstange 22 mit dem Sperrkeil 18 direkt mit der Schaltgabel verbunden ist. Die Verbindung kann dabei direkt erfolgen oder über einen zusätzlich angebrachte Halterung 9, wie sie im Ausführungsbeispiel beschrieben ist. Die Form der Halterung ist dabei an die baulichen Erfordernisse anpassbar.

Es ist weiterhin möglich an der Schaltgabel 5 oder Halterung 9 eine Vorrichtung vorzusehen, die mit einer entsprechenden Sperrfunktion an der Schaltgabel 5 oder der Halterung 9 und der Parksperrenklinke 11 für eine formschlüssige Festsetzung der Parksperrenklinke 11 benutzt wird, damit bei starken Beschleunigungsimpulsen kein Kontakt mit dem Parksperrenrad erfolgt.

In den Figuren des Ausführungsbeispiels ist am zweiten Arm 9b der Halterung 9 ein Lasche 9c vorgesehen. Die Parksperrenklinke 11 weist eine Schnittstelle 19 auf, die mit der Lasche 9c in formschlüssige Position gebracht werden kann, wenn die Parksperrenanordnung 10 in deaktivierten Zustand ist.

Um die Parksperre zu betätigen, bewegt der Aktuator seine Aktuatorstange 22 in y-Richtung und auf das Widerlager 15 zu. Die Einrückfeder wird dabei gespannt und der Sperrkeil schiebt sich in den Raum 30 und drückt die Parksperrenklinke in z-Richtung nach unten. Zum Ausrücken des Sperrkeils bewegt sich die Aktuatorstange in y-Richtung nach links und der Sperrkeil gibt die Parksperrenklinke frei.

Durch die Bewegung der Parksperrenklinke nach oben in z-Richtung und der Lasche 9c in y-Richtung kann die Parksperrenklinke blockieren.

### Bezugszeichen

- 1: Parksperrensystem
- 2: Schaltwalze
- 3: Kontur
- 4: Schaltgabelanordnung
- 5: Schaltgabel
- 6: Schaltgabelwelle
- 7: Schaltgabelwelle
- 8: Nietverbindung
- 9: Halterung
- 9a: erster Arm
- 9b: zweiter Arm
- 9c: Lasche
- 10: Parksperrenanordnung
- 11: Parksperrenklinke
- 12: Klinkenachse
- 13: Parksperrenrad
- 14: Rückholfeder
- 15: Widerlager
- 16: Schraube
- 18: Sperrkeil
- 18a: Endbereich
- 18b: Flanken
- 18c: Befestigungsbereich
- 19: Stift
- 20: Einrückfeder
- 21: Ausgangswelle
- 22: Aktuatorstange
- 23: Führungsplatte
- 24: Flanschbuchse
- 25: Gleitlager
- 26: Arm
- 27: Gehäuse
- 30: Raum

## Patentansprüche

1. Parksperrensystem (1) mit einer Schaltwalze (3) mindestens einer daran angebundenen Schaltgabelanordnung (4) mit Schaltgabel (5) sowie einer Parksperrenanordnung (10), die ein Parksperrenrad (13) und eine Parksperrenklinke (11) aufweist, wobei die Parksperrenklinke (11) drehbar an einer Klinkenachse (12) gelagert ist, wobei das Einrücken der Parksperrenklinke (11) in einer Lücke des Parksperrenrad (13) über eine von einem Aktuator über eine Aktuatorstange (22) betätigbaren Sperrkeil (18) erfolgt, **dadurch gekennzeichnet, dass** der Sperrkeil (18) in ein Widerlager (15) eingreift, wobei das Widerlager (15) drehbar an einem Gehäuse (27) gelagert ist.

2. Parksperrensystem (1) nach Anspruch 1, **dadurch gekennzeichnet, dass** das Widerlager (15) Führungsplatten (23) umfasst, die den Sperrkeil (18) auf zwei Seiten führen.

3. Parksperrensystem (1) nach Anspruch 1 oder 2, **dadurch gekennzeichnet, dass** der Sperrkeil (18) in einen Raum (30) eingeführt wird, der durch das Widerlager (15), die Parksperrenklinke (11) und die Führungsplatten (23) gebildet ist.

4. Parksperrensystem (1) nach einem der vorhergehenden Ansprüche, **dadurch gekennzeichnet, dass** der Sperrkeil (18) einen Endbereich (18a) einer ersten Dicke (D1) sowie einem Befestigungsbereich (18b) einer zweiten Dicke (D2) aufweist, wobei die Bereiche über Flanken (18c) ineinander übergehen.

5. Parksperrensystem (1) nach einem der vorhergehenden Ansprüche, **dadurch gekennzeichnet, dass** das Widerlager (15), die Führungsplatten (23) und die Parksperrenklinke den Raum (30) begrenzen, in dem der Sperrkeil (18) in allen Raumrichtungen geführt ist.

6. Parksperrensystem (1) nach einem der vorhergehenden Ansprüche, **dadurch gekennzeichnet, dass** die Aktuatorstange (22) an einer von der Schaltwalze (3) geführten Schaltgabelanordnung (4) angebunden ist.

7. Parksperrensystem (1) nach Anspruch 6, **dadurch gekennzeichnet, dass** die Anbindung der Aktuatorstange (22) direkt erfolgt oder eine Halterung (9) die Aktuatorstange (22) trägt.

8. Parksperrensystem (1) nach Anspruch 6 oder 7, **dadurch gekennzeichnet, dass** and der Schaltgabelanordnung (4) oder an der Halterung (9) Vorrichtungen vorgesehen sind, die die Parksperrenanordnung (10) im deaktivierten Zustand sichern.

9. Parksperrensystem (1) nach einem der Ansprüche 6 bis 8, **dadurch gekennzeichnet, dass** die Halterung (9) eine Lasche (9c) aufweist, die Parksperrenklinke (11) formschlüssig aufhält.
